# FASCICULE DE BREVET EUROPEEN

(11) **EP 1 995 422 B1**
(45) Date de publication et mention de la délivrance du brevet: **18.11.2009**
(21) Numéro de dépôt: 08156320.7
(22) Date de dépôt: 15.05.2008
(51) Int. Cl.: F01N 3/20, F01N 11/00, F01N 3/36

(54) **Methode et dispositif de controle d`un catalyseur de depollution de moteur diesel**
Verfahren und Vorrichtung zur Steuerung eines Katalysators zur Abgasentgiftung eines Dieselmotors
Method and device for controlling a diesel engine depollution catalyst

(30) Priorité: 21.05.2007 FR 0755146
(43) Date de publication de la demande: 26.11.2008
(73) Titulaire: Peugeot Citroën Automobiles Société Anonyme, 78140 Velizy Villacoublay (FR)
(72) Inventeur: Walter, Christian, 78180 Montigny le Bretonneux (FR)
(74) Mandataire: Ménès, Catherine

(56) Documents cités:
- EP-A- 1 052 385
- WO-A-01/49993
- DE-A1- 10 113 010
- FR-A- 2 710 105
- FR-A- 2 886 347
- JP-A- 4 060 106

## Description

L'invention concerne les systèmes de dépollution des moteurs Diesel et, plus particulièrement une méthode de contrôle de la présence et de l'efficacité des catalyseurs d'oxydation utilisés pour cette dépollution ainsi qu'un dispositif permettant de mettre en oeuvre cette méthode.

De tels méthodes et dispositifs sont déjà connus des documents FR 2 710 105 et EP 1 052 385.

Les moteurs Diesel n'émettent que de faibles quantités de monoxyde de carbone (CO), hydrocarbures imbrûlés et oxyde d'azote (NOx).

Dans le cas des moteurs fonctionnant à relativement faibles charges, comme ceux des véhicules automobiles particuliers, l'utilisation d'un catalyseur d'oxydation deux voies est donc souvent suffisant pour traiter de façon satisfaisante les gaz d'échappement émis par ce type de moteur.

Ces catalyseurs qui brûlent les hydrocarbures et le monoxyde de carbone contenus dans les gaz d'échappement sont composés d'une céramique imprégnée de matériaux à base de métaux précieux tels que le platine ou le palladium.

La capacité de traitement des polluants par les catalyseurs d'oxydation dépend étroitement de sa température de fonctionnement et, en particulier, de la température des gaz d'échappement.

L'un des inconvénients majeur de cette technologie de dépollution est le vieillissement du catalyseur provoqué, d'une part par les températures élevées auxquelles il est donc soumis pour fonctionner et, d'autre part, par les dommages causés par certains éléments contenus dans le gazole et l'huile du moteur, tels que le souffre, le phosphore, le calcium..

Ce vieillissement se caractérise par une diminution plus ou moins importante de l'efficacité du catalyseur au fur et à mesure de l'augmentation de la distance parcourue par le véhicule.

II est donc nécessaire de disposer d'un moyen de contrôle du catalyseur pour évaluer son état ainsi que, éventuellement, sa présence.

On ne dispose pas, à l'heure actuelle de dispositif permettant de réaliser ces opérations de contrôle sur les catalyseurs Diesel. Il n'existe pas de capteur implantable sur un véhicule automobile capable de mesurer les concentrations en hydrocarbure. La présence ou l'absence d'un filtre à particules par exemple est établie à partir de mesure de contre pression échappement.

Le but de l'invention est donc de proposer une méthode simple et robuste de mesure de l'efficacité d'un catalyseur et éventuellement de vérification de sa présence fondée sur la mesure, à la fois, de la température enregistrée en aval du catalyseur et/ou de sa dérivée. L'invention concerne également un dispositif de mise en oeuvre de cette méthode.

A cet effet, la présente invention a pour objet une méthode de contrôle d'un catalyseur de dépollution contenu dans la ligne d'échappement d'un moteur Diesel de véhicule automobile ladite ligne d'échappement comportant un capteur de température disposé en aval du catalyseur et connecté à un calculateur de contrôle moteur, lui-même connecté à une unité de gestion de l'ensemble des organes soumis à surveillance.

Selon l'invention, cette méthode consiste à mettre en oeuvre une post-injection dans les cylindres du moteur et, durant un temps prédéterminé à la suite de celle-ci :
- enregistrer le signal de température délivré par le capteur et comparer sa valeur maximale à une valeur représentative d'un catalyseur dont l'efficacité est conforme aux normes requises,
- effectuer et enregistrer la dérivée du signal de température délivré par le capteur et comparer sa valeur maximale à une valeur représentative d'un catalyseur dont l'efficacité est conforme aux normes requises,
- mettre en oeuvre une alerte lorsque la valeur maximale de la température enregistrée et/ou la valeur maximale de sa dérivée indique que l'efficacité du catalyseur est inférieure aux normes requises.
- Avantageusement, la méthode comporte une phase consistant à détecter une accélération du véhicule et, durant un temps prédéterminé à la suite de cette accélération :
   ■ enregistrer le signal de température délivré par le capteur et comparer sa valeur maximale à une valeur représentative de l'absence du catalyseur,
   ■ effectuer et enregistrer la dérivée du signal de température délivré par le capteur et comparer sa valeur maximale à une valeur représentative de l'absence du catalyseur,
   ■ mettre en oeuvre une alerte lorsque la valeur maximale de la température enregistrée et/ou la valeur maximale de sa dérivée indique que la catalyseur n'est pas présent.
- Selon d'autres caractéristiques avantageuses de la méthode conforme à l'invention :

- Elle comporte une étape de comparaison de la vitesse et de la charge du moteur par rapport à des seuils calibrés à l'issue de laquelle la commande de la post-injection est autorisée si ladite vitesse et ladite charge respectent les seuils calibrés, durant un temps prédéterminé.
- Elle comporte une étape de test de l'état de marche du capteur.
- Elle comporte une étape d'évaluation de l'accélération imprimée au véhicule.
- Elle comporte une étape autorisant le traitement de la température relevée uniquement si les tests de l'état de marche du capteur, de mesure du temps passé au ralenti et d'évaluation de l'accélération imprimée s'avèrent positifs.

On signalera encore que l'évaluation de l'accélération imprimée par le conducteur, est réalisée sur le rapport de boite de vitesse engagé ou sur les paramètres d'injection ou encore sur le débit d'air.

L'invention concerne aussi un dispositif permettant de mettre en oeuvre la méthode que l'on vient de décrire :
- Le dispositif comporte un module de d'évaluation de l'efficacité du catalyseur comprenant un comparateur de la température maximale du signal délivré par le capteur à une valeur calibrée et un comparateur de la dérivée maximale du signal délivré par le capteur à une valeur donnée, un circuit de commande de post-injection. et une unité de traitement des informations apte à activer le gestionnaire de l'état de l'ensemble des organes si au moins l'une des informations transmise par les comparateurs indique que l'efficacité du catalyseur est inférieure aux normes requises.
- Avantageusement, le dispositif comporte aussi un module de vérification de la présence du catalyseur comprenant un comparateur de la valeur maximale du signal délivré par le capteur à une valeur calibrée, un comparateur de la valeur maximale de la dérivée du signal délivré par le capteur à une valeur calibrée et une unité de traitement des informations, connectée au module d'évaluation de l'efficacité du catalyseur ainsi qu'à l'unité de gestion, pour autoriser le fonctionnement du module d'évaluation si l'information délivrée par l'un et/ou l'autre des comparateurs est significative de la présence du catalyseur et inhiber le fonctionnement dudit module d'évaluation dans le cas contraire.

Selon d'autres caractéristiques avantageuses :
- Le module d'évaluation de l'efficacité du catalyseur comporte une unité de comparaison de la vitesse et de la charge du moteur par rapport à des seuils calibrés apte à commander le circuit de post-injection lorsque les conditions de stabilité sont établies depuis un temps assigné.
- Le dispositif comporte un circuit de test du capteur de température permettant de vérifier son état de marche.
- Le module de vérification de la présence du catalyseur comporte un circuit de mesure du temps passé au ralenti par le véhicule apte à mesurer le temps passé au ralenti et à le comparer avec un seuil minimal déterminé.
- Le module de vérification de la présence du catalyseur comporte un circuit d'évaluation de l'accélération du véhicule à partir du passage du rapport de boite de vitesse engagé.
- En variante, le module de vérification de la présence du catalyseur comporte un circuit d'évaluation de l'accélération du véhicule à partir des paramètres d'injection.
- En variante encore, le module de vérification de la présence du catalyseur comporte un circuit d'évaluation de l'accélération du véhicule à partir du débit d'air.
- Le module de surveillance de l'efficacité du catalyseur comporte un circuit de filtrage de la dérivée du signal de température délivré par le capteur de température.

D'autres caractéristiques et avantages de l'invention apparaîtront clairement à la lecture de la description ci-après, donnée à titre indicatif en référence aux dessins annexés dans lesquels :
- La figure 1 est un diagramme montrant un moteur de véhicule automobile et ses moyens de contrôles intégrant l'invention.
- La figure 2 représente les courbes de températures en aval de la position du catalyseur, avec et sans catalyseur.
- La figure 3 représente les courbes dérivées desdites températures.
- La figure 4 est une comparaison des températures en aval de deux types de catalyseur, pour une même température amont, en fonction de la vitesse du moteur.
- La figure 5 illustre l'effet de la post-injection sur la température en aval d'un catalyseur vieilli.
- Les figure 6 et 7 présentent la température aval, non filtrée (figure 6) et filtrée (figure 7), d'un catalyseur à différentes phases de vieillissement.

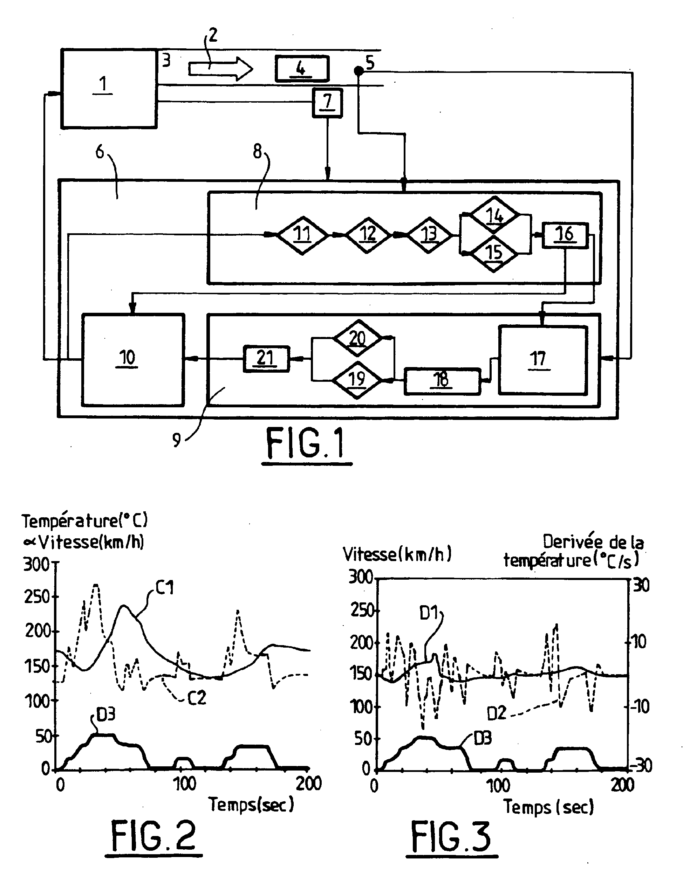

Sur la figure 1 , on a schématisé un moteur 1 muni de sa ligne d'échappement 3 dans laquelle circulent les gaz d'échappement 2. Ces gaz sont dirigés vers un catalyseur 4 composé, comme cela est connu, d'une céramique contenant une phase active.

Un capteur de température 5 est disposé, en aval du catalyseur 4 dans la ligne d'échappement. Ce capteur est connecté au calculateur de contrôle moteur 6 auquel est également connecté une unité 7 de mesure des paramètres opératoires du moteur.

Selon l'invention, le calculateur de contrôle moteur 6 comporte, un premier module 8 de vérification de la présence du catalyseur 4 et un second module 9 d'évaluation de l'efficacité dudit catalyseur.

Le calculateur de contrôle moteur comporte encore une unité 10 de gestion de l'état l'ensemble des organes soumis à surveillance.

Le module 8 de vérification de la présence du catalyseur 4 comprend :
- Un circuit 11 de test du capteur 5, permettant de vérifier son état de marche,
- Un circuit 12 de mesure du temps passé au ralenti par le véhicule.
- Un circuit 13 d'évaluation de l'accélération du véhicule.
- Un comparateur 14 de la valeur maximale du signal délivré par le capteur 5 à une valeur calibrée.
- Un comparateur 15 de la valeur maximale de la dérivée du signal délivré par le capteur 5 à une valeur calibrée.
- Une unité de traitement des informations 16.

Le module 9 d'évaluation de l'efficacité du catalyseur 5 comprend :
- Un module 17 de comparaison de la vitesse et de la charge du moteur par rapport à des seuils calibrés.
- Un circuit 18 de commande de post-injection.
- Un comparateur 19 de la température maximale du signal délivré par le capteur 5 à une valeur donnée.
- Un comparateur 20 de la dérivée maximale du signal délivré par le capteur 5 à une valeur donnée.
- Une unité de traitement des informations 21.

Le module 8 est chargé de vérifier la présence du catalyseur 4. Cette vérification s'opère durant une phase d'accélération du véhicule, par comparaison de la valeur maximale de la dérivée temporelle de la température enregistrée par le capteur 5 avec une valeur calibrée et/ou par comparaison de la valeur maximale de température enregistrée par le capteur 5 à une valeur calibrée et ce, durant un temps prédéterminé d'accélération.

Pour ce faire, le module 8 reçoit, dans le calculateur de contrôle moteur, les informations envoyées par le capteur de température 5. Le circuit 11 teste, au préalable, l'état de marche du capteur.

Le circuit 12 mesure le temps passé au ralenti et le compare avec un seuil minimal déterminé, afin d'éviter les fausses détections provoquées par un roulage comportant des phases transitoires accélérations/décélérations trop rapprochées.

Le circuit 13 évalue l'accélération sollicitée par le conducteur, par exemple le passage du 2^{e} rapport de boite de vitesse, et le compare avec une valeur minimale prédéterminée.

Si les tests préliminaires effectués par les circuits 11 , 12 et 13 s'avèrent positifs, le module 8 autorise le traitement de la température relevée par le capteur 5, dans les comparateurs 14 et 15.

A titre d'exemple, sur les Figures 2 et 3 on a représenté l'évolution des températures (figure 2) et dérivées des températures (figure 3) relevées en aval du catalyseur pour des vitesses du véhicule comprises entre 0 et 60 km/h (courbe D3). Les courbes C1 et D1 montrent cette évolution en présence du catalyseur tandis que les courbes C2 et D2 la montrent en absence dudit catalyseur.

Le comparateur 14 enregistre le signal de température transmis par le capteur 4 durant un temps fixé, suivant l'accélération minimale, et compare la valeur maximale enregistrée à une valeur donnée correspondant à l'absence de catalyseur. Une température maximale inférieure à 200°C, par exemple, dans les 30 secondes consécutives à l'accélération du véhicule au moins en 2^{e} rapport de la boite de vitesses garanti la présence du catalyseur.

Le comparateur 15 enregistre la dérivée du signal précédent et compare sa valeur maximale à une valeur donnée correspondant à l'absence de catalyseur. Une dérivée maximale de la température inférieure à 2°C/s, par exemple, dans les 30 s consécutives à l'accélération du véhicule au moins en 2^{e} rapport de la boite de vitesses garanti la présence du catalyseur.

L'unité de traitement des informations 16 du module 8 est connectée au module 9 d'évaluation de l'efficacité du catalyseur ainsi qu'à l'unité 10 de gestion de l'état de l'ensemble des organes du moteur soumis à surveillance.

Si les tests effectués par le comparateur 14 et/ou le comparateur 15 concluent à l'absence du catalyseur, l'information est transmise par l'unité de traitement des informations 16 au gestionnaire 10. Ce dernier informe le conducteur, inhibe le fonctionnement du module 9 d'évaluation de l'efficacité du catalyseur et limite, par exemple, les performances du moteur.

En revanche, si lesdits tests concluent à la présence du catalyseur, l'information, transmise au gestionnaire 10 et au module 9, autorise le fonctionnement de ce dernier.

Le contrôle de l'efficacité du catalyseur qui s'effectue dans le module 9 nécessite de garantir une stabilité minimale de la vitesse et de la charge du moteur par rapport à des seuils calibrés afin d'éviter les fausses détections.

Des catalyseurs de grande taille, présentant de ce fait une forte inertie thermique, nécessitent des temps de d'acquisition des paramètres plus longs et tolèrent potentiellement une variabilité plus forte desdits critères.

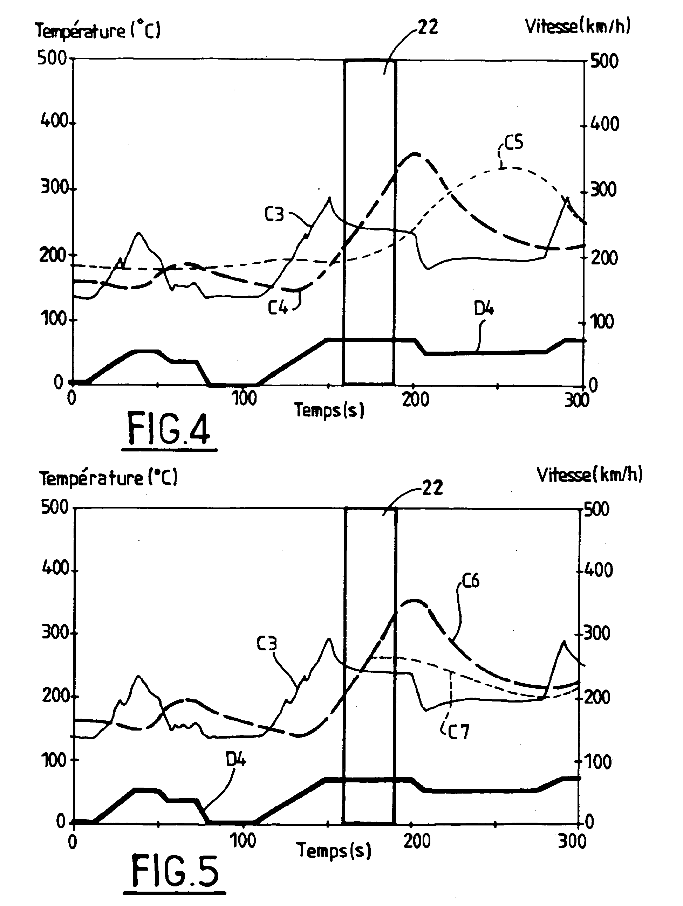

Par exemple, la figure 4 montre, pour une même température en amont d'un catalyseur (courbe C3), la température aval d'un catalyseur de 1.2 L de volume (courbe C4) et de 2.5 L de volume (courbe C5) représentées pour des vitesses véhicule (courbe D4) comprises entre 0 et 80km/h avec un évènement de post-injection 22 calibré.

Lorsque les conditions de stabilité sont établies depuis un temps assigné par le module 17, celui-ci autorise le circuit 18 à commander une post-injection générant des hydrocarbures durant un temps fixé.

Dans le comparateur 19, le signal de température délivré par le capteur 5 est ensuite enregistré durant un temps fixé suivant la post-injection et sa valeur maximale comparée à une valeur représentative d'un catalyseur dont l'efficacité est conforme aux normes requises.

Dans le comparateur 20, c'est la dérivée du signal précédent qui est enregistrée et dont la valeur maximale est comparée à une valeur représentative d'un catalyseur dont l'efficacité est conforme aux normes requises.

L'information délivrée par les comparateurs est envoyée à l'unité de traitement des informations 21, elle-même connectée au gestionnaire 10. Si l'information transmise par l'un des comparateur 19, 20, ou les deux indique que l'efficacité du catalyseur est insuffisante, cette information est transmise par l'unité 21 au gestionnaire 10. Ce dernier informe le conducteur, et peut, par exemple, limiter les performances du moteur.

A titre d'exemple, la figure 5 montre ainsi, pour une même température en amont d'un catalyseur (C3) et des vitesses véhicule (D4) comprises entre 0 et 80 km/h, la température aval d'un catalyseur modérément vieilli de 1.2 L de volume (Courbe C6) et d'un catalyseur dont le substrat ne comporte pas de phase catalytique (Courbe C7), représentatif d'un cas de dégradation ultime, avec un évènement de post injection 22.

Dans cet exemple, la post injection est activée 10 s après stabilisation des conditions de fonctionnement du moteur pendant 30 s avec un débit de 4 mg/cps à 120° d'angle de vilebrequin. Une température maximale supérieure par exemple à un seuil de 280°C dans une période de 40 s débutant 10 s après l'activation de la post injection garanti un catalyseur efficace.

Afin d'accroître la fiabilité des tests en limitant le bruit lié à l'inertie thermique propre de la sonde de température et ou à la fréquence d'échantillonnage trop grande par rapport au temps de réponse de la sonde, il est intéressant de filtrer, lisser la dérivée du signal de température en aval catalyseur lors du contrôle de l'efficacité de celui-ci. Cette opération n'est pas utile pour établir sa présence. En effet, dans ce cas c'est l'inertie thermique du substrat qui implique normalement ce lissage et sert de principe de base à sa détection.

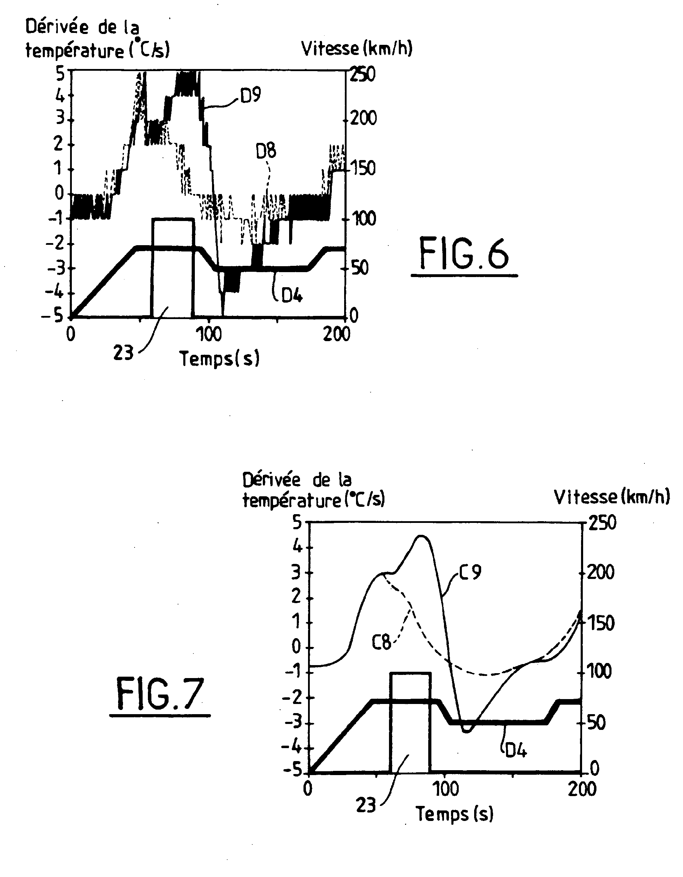

Les Figures 6 et 7 montrent par exemple l'intérêt de ce filtrage. Sur la figure 6, la courbe D8 montre la température aval non filtrée d'un catalyseur utilisant un substrat de 1.2 L de volume ne comportant pas de phase catalytique, représentatif d'un cas de dégradation ultime et la courbe D9, celle d'un catalyseur modérément vieilli de 1.2 L de volume, pour des vitesses véhicule D4 comprises entre 0 et 80 km/h avec un évènement de post injection 23.

Sur la figure 7, ces mesures ont été filtrées en effectuant une moyenne sur 20 s. La courbe C8 correspond à la courbe D8 de la figure 6 et la courbe C9 à la courbe D9.

Une dérivée maximale de la température aval supérieure par exemple à 2°C/s dans une période de 30 s débutant 10 s après l'activation de la post injection garanti un catalyseur efficace.

La méthode et les moyens de sa mise en oeuvre que l'on vient de décrire permettent, à la fois, de s'assurer de la présence du catalyseur et de mesurer son efficacité sur une plage très large allant jusqu'à une dégradation ultime équivalant à son absence, moyennant la stabilité de certaines conditions de fonctionnement.

Pour ce faire, un seul capteur de température, disposé en aval du catalyseur, dans la ligne d'échappement, est nécessaire.

L'utilisation simultanée de la température délivrée par le capteur et de sa dérivée temporelle accroît la robustesse des contrôles.

Le recours à l'analyse de dérivées ou de températures maximales en aval du catalyseur optimise la post-injection en permettant de réduire sa durée et la quantité de carburant injectée.

Bien entendu l'invention n'est pas limité au mode de réalisation décrit et représenté.

En particulier, la Courbe C2 de température relevée en l'absence de catalyseur est très comparable à celle relevée en amont du catalyseur. La Figure 2 illustre donc également le décalage temporel entre les signaux de température amont et aval induit par le catalyseur. Un capteur de température supplémentaire disposé en amont du catalyseur dans la ligne d'échappement permet de remplacer les comparaisons à des seuils pré-calibrés par des comparaisons d'acquisitions en temps réel.

L'identification de la demande de couple moteur peut être effectuée par d'autres moyens que le rapport de boîte de vitesses, par exemple, par les paramètres d'injection ou de débit d'air.

## Revendications

1. Méthode de contrôle d'un catalyseur de dépollution (4) contenu dans la ligne d'échappement (3) d'un moteur Diesel (1) de véhicule automobile ladite ligne d'échappement comportant un capteur de température (5) disposé en aval du catalyseur (4) et connecté à un calculateur de contrôle moteur (6) lui-même connecté à une unité (10) de gestion de l'état de l'ensemble des organes soumis à surveillance,
**caractérisée en ce qu'**elle consiste à mettre en oeuvre une post-injection dans les cylindres du moteur (1) et, durant un temps prédéterminé à la suite de celle-ci :
- enregistrer le signal de température délivré par le capteur (5) et comparer sa valeur maximale à une valeur représentative d'un catalyseur dont l'efficacité est conforme aux normes requises,
- effectuer et enregistrer la dérivée du signal de température délivré par le capteur (5) et comparer sa valeur maximale à une valeur représentative d'un catalyseur dont l'efficacité est conforme aux normes requises,
- mettre en oeuvre une alerte lorsque la valeur maximale de la température enregistrée et/ou la valeur maximale de sa dérivée indique que l'efficacité du catalyseur est inférieure aux normes requises
et **en ce qu'**elle consiste de plus à détecter une accélération du véhicule et, durant un temps prédéterminé à la suite de celle-ci :
- enregistrer le signal de température délivré par le capteur (5) et comparer sa valeur maximale à une valeur représentative de l'absence du catalyseur,
- effectuer et enregistrer la dérivée du signal de température délivré par le capteur (5) et comparer sa valeur maximale à une valeur représentative de l'absence du catalyseur,
- mettre en oeuvre une alerte lorsque la valeur maximale de la température enregistrée et/ou la valeur maximale de sa dérivée indique que la catalyseur n'est pas présent.

2. Méthode de contrôle d'un catalyseur de dépollution selon la revendication 1 ,
**caractérisée en ce qu'**elle comporte une étape de comparaison de la vitesse et de la charge du moteur par rapport à des seuils calibrés à l'issue de laquelle la commande de la post-injection est autorisée si ladite vitesse et ladite charge restent égales ou supérieures aux seuils calibrés durant un temps prédéterminé.

3. Méthode de contrôle d'un catalyseur de dépollution selon l'une des revendications précédentes,
**caractérisée en ce qu'**elle comporte une étape de test de l'état de marche du capteur.

4. Méthode de contrôle d'un catalyseur de dépollution selon l'une des revendications précédentes,
**caractérisée en ce qu'**elle comporte une étape de mesure du temps passé au ralenti et de comparaison avec un seuil minimal déterminé.

5. Méthode de contrôle d'un catalyseur de dépollution selon l'une des revendications précédentes,
**caractérisée en ce qu'** elle comporte une étape d'évaluation de l'accélération imprimée au véhicule.

6. Méthode de contrôle d'un catalyseur de dépollution selon les revendications 3, 4, 5, prises en combinaison,
**caractérisée en ce qu'**elle comporte une étape autorisant le traitement de la température relevée uniquement si les tests de l'état de marche du capteur, de mesure du temps passé au ralenti et d'évaluation de l'accélération imprimée au véhicule s'avèrent positifs.

7. Méthode de contrôle d'un catalyseur de dépollution selon la revendication 5 ou 6,
**caractérisée en ce que** l'évaluation de l'accélération imprimée au véhicule, est réalisée sur le rapport de boite de vitesse engagé.

8. Méthode de contrôle d'un catalyseur de dépollution selon la revendication 5 ou 6,
**caractérisée en ce que** l'évaluation de l'accélération imprimée au véhicule, est réalisée sur les paramètres d'injection.

9. Méthode de contrôle d'un catalyseur de dépollution selon la revendication 5 ou 6,
**caractérisée en ce que** l'évaluation de l'accélération imprimée au véhicule est réalisée sur le débit d'air.

10. Dispositif de contrôle d'un catalyseur de dépollution (4) contenu dans la ligne d'échappement (3) d'un moteur Diesel (1) de véhicule automobile ladite ligne d'échappement comportant un capteur de température (5) disposé en aval du catalyseur (4) et connecté à un calculateur de contrôle moteur (6) lui-même connecté à une unité (10) de gestion de l'état de l'ensemble des organes soumis à surveillance,
**caractérisé en ce qu'**il comporte un module (9) d'évaluation de l'efficacité du catalyseur (5) comprenant un comparateur (19) de la température maximale du signal délivré par le capteur (5) à une valeur donnée et un comparateur (20) de la dérivée maximale du signal délivré par le capteur (5) à une valeur donnée, un circuit (18) de commande de post-injection. et une unité de traitement des informations (21) apte à activer le gestionnaire (10) si au moins l'une des informations transmise par les comparateurs (19, 20) indique que l'efficacité du catalyseur est inférieure aux normes ;
et qu'il comporte un module (8) de vérification de la présence du catalyseur (4) comprenant un comparateur (14) de la valeur maximale du signal délivré par le capteur (5) à une valeur calibrée, un comparateur (15) de la valeur maximale de la dérivée du signal délivré par le capteur (5) à une valeur calibrée et une unité de traitement des informations (16), connectée au module (9) d'évaluation de l'efficacité du catalyseur ainsi qu'à l'unité (10) de gestion de l'état de l'ensemble des organes soumis à surveillance, pour autoriser le fonctionnement du module (9) si l'information délivrée par le comparateur (14) et/ou le comparateur (15) est significative de la présence du catalyseur et inhiber le fonctionnement dudit module (9) dans le cas contraire.

11. Dispositif de contrôle d'un catalyseur de dépollution selon la revendication 10,
**caractérisé en ce que** le module (9) comporte une unité (17) de comparaison de la vitesse et de la charge du moteur par rapport à des seuils calibrés apte à commander le circuit (18) de post-injection lorsque les conditions de stabilité sont établies depuis un temps assigné.

12. Dispositif de contrôle d'un catalyseur de dépollution selon l'une des revendications 10 à 11,
**caractérisé en ce qu'**il comporte un circuit (11) de test du capteur (5) permettant de vérifier son état de marche.

13. Dispositif de contrôle d'un catalyseur de dépollution selon l'une des revendications 10 à 12,
**caractérisé en ce que** le module (8) comporte un circuit (12) de mesure du temps passé au ralenti par le véhicule apte à mesurer le temps passé au ralenti et à le comparer avec un seuil minimal déterminé.

14. Dispositif de contrôle d'un catalyseur de dépollution selon l'une des revendications 10 à 13,
**caractérisé en ce que** le module (8) comporte un circuit (13) d'évaluation de l'accélération du véhicule à partir du passage du rapport de boite de vitesse engagé.

15. Dispositif de contrôle d'un catalyseur de dépollution selon l'une des revendications 10 à 14,
**caractérisé en ce que** le module (8) comporte un circuit (13) d'évaluation de l'accélération du véhicule à partir des paramètres d'injection.

16. Dispositif de contrôle d'un catalyseur de dépollution selon l'une des revendications 10 à 15,
**caractérisé en ce que** le module (8) comporte un circuit (13) d'évaluation de l'accélération du véhicule à partir du débit d'air.

17. Dispositif de contrôle d'un catalyseur de dépollution selon l'une des revendications 10 à 16,
**caractérisé en ce que** le module (9) comporte un circuit de filtrage de la dérivée du signal de température délivré par le capteur (5).

## Claims

1. Method for inspecting a catalytic converter (4) contained in the exhaust line (3) of a diesel engine (1) of a motor vehicle, the said exhaust line comprising a temperature sensor (5) placed downstream of the catalytic converter (4) and connected to an engine control computer (6) itself connected to a unit (10) for managing the state of all the members subjected to supervision, **characterized in that** it consists in applying a post-injection into the cylinders of the engine (1) and, for a predetermined time following the latter:
- recording the temperature signal delivered by the sensor (5) and comparing its maximum value with a value representative of a catalytic converter the efficiency of which complies with the required standards,
- taking and recording the differential of the temperature signal delivered by the sensor (5) and comparing its maximum value with a value representative of a catalytic converter the efficiency of which complies with the required standards,
- applying a warning when the maximum value of the recorded temperature and/or the maximum value of its differential indicates that the efficiency of the catalytic converter is below the required standards and **in that** it also consists in detecting an acceleration of the vehicle and, for a predetermined time following the latter:
- recording the temperature signal delivered by the sensor (5) and comparing its maximum value with a value representative of the absence of the catalytic converter,
- taking and recording the differential of the temperature signal delivered by the sensor (5) and comparing its maximum value with a value representative of the absence of the catalytic converter,
- applying a warning when the maximum value of the recorded temperature and/or the maximum value of its differential indicates that the catalytic converter is not present.

2. Method for inspecting a catalytic converter according to Claim 1, **characterized in that** it comprises a step of comparing the speed and the load of the engine relative to calibrated thresholds after which the post-injection command is authorized if the said speed and the said load remain equal to or greater than [translation moves on to Claim 3]

3. Method for inspecting a catalytic converter according to one of the preceding claims, **characterized in that** it comprises a step of testing the state of operation of the sensor.

4. Method for inspecting a catalytic converter according to one of the preceding claims, **characterized in that** it comprises a step of measuring the elapsed time at idle speed and of comparing with a determined minimum threshold.

5. Method for inspecting a catalytic converter according to one of the preceding claims, **characterized in that** it comprises a step of evaluating the acceleration imparted to the vehicle.

6. Method for inspecting a catalytic converter according to Claims 3, 4 and 5 taken in combination, **characterized in that** it comprises a step of authorizing the processing of the temperature read only if the tests of the state of operation of the sensor, of measuring the elapsed time at idle speed and of evaluating the acceleration imparted to the vehicle are positive.

7. Method for inspecting a catalytic converter according to Claim 5 or 6, **characterized in that** the evaluation of the acceleration imparted to the vehicle is carried out on the gearbox ratio engaged.

8. Method for inspecting a catalytic converter according to Claim 5 or 6, **characterized in that** the evaluation of the acceleration imparted to the vehicle is carried out on the injection parameters.

9. Method for inspecting a catalytic converter according to Claim 5 or 6, **characterized in that** the evaluation of the acceleration imparted to the vehicle is carried out on the airflow rate.

10. Device for inspecting a catalytic converter (4) contained in the exhaust line (3) of a diesel engine (1) of a motor vehicle, the said exhaust line comprising a temperature sensor (5) placed downstream of the catalytic converter (4) and connected to an engine-control computer (6) itself connected to a unit (10) for managing the state of all the members subjected to supervision, **characterized in that** it comprises a module (9) for evaluating the efficiency of the catalytic converter (5) comprising a comparator (19) of the maximum temperature of the signal delivered by the sensor (5) with a given value and a comparator (20) of the maximum differential of the signal delivered by the sensor (5) with a given value, a post-injection command circuit (18), and an information-processing unit (21) capable of activating the manager (10) if at least one of the items of information transmitted by the comparators (19, 20) indicates that the efficiency of the catalytic converter is below the standards; and that it comprises a module (8) for verifying the presence of the catalytic converter (4) comprising a comparator (14) of the maximum value of the signal delivered by the sensor (5) with a calibrated value, a comparator (15) of the maximum value of the differential of the signal delivered by the sensor (5) with a calibrated value and an information-processing unit (16) connected to the module (9) for evaluating the efficiency of the catalytic converter and to the unit (10) for managing the state of all the members subjected to supervision, in order to authorize the operation of the module (9) if the information delivered by the comparator (14) and/or the comparator (15) signifies the presence of the catalytic converter and in order to disable the operation of the said module (9) in the contrary case.

11. Device for inspecting a catalytic converter according to Claim 10, **characterized in that** the module (9) comprises a unit (17) for comparing the speed and the load of the engine relative to calibrated thresholds capable of commanding the post-injection circuit (18) when the conditions of stability have been established for an assigned time.

12. Device for inspecting a catalytic converter according to one of Claims 10 or 11, **characterized in that** it comprises a circuit (11) for testing the sensor (5) making it possible to verify its operating state.

13. Device for inspecting a catalytic converter according to one of Claims 10 to 12, **characterized in that** the module (8) comprises a circuit (12) for measuring the time spent at idle speed by the vehicle capable of measuring the elapsed time at idle speed and of comparing it with a determined minimum threshold.

14. Device for inspecting a catalytic converter according to one of Claims 10 to 13, **characterized in that** the module (8) comprises a circuit (13) for evaluating the acceleration of the vehicle from the selection of the engaged gearbox ratio.

15. Device for inspecting a catalytic converter according to one of Claims 10 to 14, **characterized in that** the module (8) comprises a circuit (13) for evaluating the acceleration of the vehicle based on injection parameters.

16. Device for inspecting a catalytic converter according to one of Claims 10 to 15, **characterized in that** the module (8) comprises a circuit (13) for evaluating the acceleration of the vehicle based on the airflow rate.

17. Device for inspecting a catalytic converter according to one of Claims 10 to 16, **characterized in that** the module (9) comprises a circuit for filtering the differential of the temperature signal delivered by the sensor (5).

## Patentansprüche

1. Verfahren zur Kontrolle eines Abgasentgiftungskatalysators (4), der in der Auspuffanlage (3) eines Dieselmotors (1) eines Kraftfahrzeugs enthalten ist, wobei die Auspuffanlage einen Temperatursensor (5) aufweist, der hinter dem Katalysator (4) angeordnet und mit einem Motorsteuerungsrechner (6) verbunden ist, der selbst mit einer Verwaltungseinheit (10) des Zustands der Gesamtheit der überwachten Organe verbunden ist,
**dadurch gekennzeichnet, dass** es darin besteht, eine Nacheinspritzung in die Zylinder des Motors durchzuführen und während einer vorbestimmten Zeit nach dieser:
- das vom Sensor (5) gelieferte Temperatursignal zu speichern und seinen maximalen Wert mit einem für einen Katalysator repräsentativen Wert zu vergleichen, dessen Wirksamkeit den erforderlichen Normen entspricht,
- die Ableitung des vom Sensor (5) gelieferten Temperatursignals auszuführen und zu speichern und ihren maximalen Wert mit einem für einen Katalysator repräsentativen Wert zu vergleichen, dessen Wirksamkeit den erforderlichen Normen entspricht,
- einen Alarm einzuleiten, wenn der maximale Wert der gespeicherten Temperatur und/oder der maximale Wert ihrer Ableitung anzeigt, dass die Wirksamkeit des Katalysators unter den erforderlichen Normen liegt,
und dass es außerdem darin besteht, eine Beschleunigung des Fahrzeugs zu erfassen und während einer vorbestimmten Zeit nach dieser:
- das vom Sensor (5) gelieferte Temperatursignal zu speichern und seinen maximalen Wert mit einem für die Abwesenheit des Katalysators repräsentativen Wert zu vergleichen,
- die Ableitung des vom Sensor (5) gelieferten Temperatursignals auszuführen und zu speichern und ihren maximalen Wert mit einem für die Abwesenheit des Katalysators repräsentativen Wert zu vergleichen,
- einen Alarm einzuleiten, wenn der maximale Wert der gespeicherten Temperatur und/oder der maximale Wert ihrer Ableitung anzeigt, dass der Katalysator nicht anwesend ist.

2. Verfahren zur Kontrolle eines Abgasentgiftungskatalysators nach Anspruch 1, **dadurch gekennzeichnet, dass** es einen Schritt des Vergleichs der Geschwindigkeit und der Belastung des Motors mit kalibrierten Schwellwerten aufweist, nach dem die Steuerung der Nacheinspritzung erlaubt wird, wenn die Geschwindigkeit und die Belastung während einer vorbestimmten Zeit gleich den oder höher als die kalibrierten Schwellwerte bleiben.

3. Verfahren zur Kontrolle eines Abgasentgiftungskatalysators nach einem der vorhergehenden Ansprüche, **dadurch gekennzeichnet, dass** es einen Schritt des Tests des Betriebszustands des Sensors aufweist.

4. Verfahren zur Kontrolle eines Abgasentgiftungskatalysators nach einem der vorhergehenden Ansprüche, **dadurch gekennzeichnet, dass** es einen Schritt der Messung der im Leerlauf verbrachten Zeit und des Vergleichs mit einem bestimmten Mindestschwellwert aufweist.

5. Verfahren zur Kontrolle eines Abgasentgiftungskatalysators nach einem der vorhergehenden Ansprüche, **dadurch gekennzeichnet, dass** es einen Schritt der Bewertung der dem Fahrzeug verliehenen Beschleunigung aufweist.

6. Verfahren zur Kontrolle eines Abgasentgiftungskatalysators nach den Ansprüchen 3, 4 5 zusammengenommen, **dadurch gekennzeichnet, dass** es einen Schritt aufweist, der die Verarbeitung der erfassten Temperatur nur dann erlaubt, wenn die Tests des Betriebszustands des Sensors, der Messung der im Leerlauf verbrachten Zeit und der Bewertung der dem Fahrzeug verliehenen Beschleunigung sich als positiv erweisen.

7. Verfahren zur Kontrolle eines Abgasentgiftungskatalysators nach Anspruch 5 oder 6, **dadurch gekennzeichnet, dass** die Bewertung der dem Fahrzeug verliehenen Beschleunigung am eingelegten Getriebegang durchgeführt wird.

8. Verfahren zur Kontrolle eines Abgasentgiftungskatalysators nach Anspruch 5 oder 6, **dadurch gekennzeichnet, dass** die Bewertung der dem Fahrzeug verliehenen Beschleunigung an den Einspritzparametern durchgeführt wird.

9. Verfahren zur Kontrolle eines Abgasentgiftungskatalysators nach Anspruch 5 oder 6, **dadurch gekennzeichnet, dass** die Bewertung der dem Fahrzeug verliehenen Beschleunigung am Luftdurchsatz durchgeführt wird.

10. Vorrichtung zur Kontrolle eines Abgasentgiftungskatalysators (4), der in der Auspuffanlage (3) eines Dieselmotors (1) eines Kraftfahrzeugs enthalten ist, wobei die Auspuffanlage einen Temperatursensor (5) aufweist, der hinter dem Katalysator (4) angeordnet und mit einem Motorsteuerungsrechner (6) verbunden ist, der selbst mit einer Verwaltungseinheit (10) des Zustands der Gesamtheit der überwachten Organe verbunden ist,
**dadurch gekennzeichnet, dass** sie ein Modul (9) zur Bewertung der Wirksamkeit des Katalysators (5) aufweist, das einen Komparator (19) zum Vergleich der vom Sensor (5) gelieferten maximalen Temperatur mit einem gegebenen Wert und einen Komparator (20) zum Vergleich der maximalen Ableitung des vom Sensor (5) gelieferten Signals mit einem gegebenen Wert, eine Nacheinspritzungs-Steuerschaltung (18) und eine Verarbeitungseinheit der Informationen (21) enthält, die das Verwaltungsprogramm (10) aktivieren kann, wenn mindestens eine der von den Komparatoren (19, 20) übertragenen Informationen anzeigt, dass die Wirksamkeit des Katalysators unter den Normen liegt;
und dass sie ein Modul (8) zur Überprüfung der Anwesenheit des Katalysators (4) aufweist, das einen Komparator (14) zum Vergleich des maximalen Werts des vom Sensor (5) gelieferten Signals mit einem kalibrierten Wert, einen Komparator (15) zum Vergleich des maximalen Werts der Ableitung des vom Sensor (5) gelieferten Signals mit einem kalibrierten Wert und eine Verarbeitungseinheit der Informationen (16) enthält, die mit dem Modul (9) zur Bewertung der Wirksamkeit des Katalysators sowie mit der Verwaltungseinheit (10) des Zustands der Gesamtheit der überwachten Organe verbunden ist, um den Betrieb des Moduls (9) zu erlauben, wenn die vom Komparator (14) und/oder vom Komparator (15) gelieferte Information für die Anwesenheit des Katalysators kennzeichnend ist, und den Betrieb des Moduls (9) im gegenteiligen Fall zu verhindern.

11. Vorrichtung zur Kontrolle eines Abgasentgiftungskatalysators nach Anspruch 10, **dadurch gekennzeichnet, dass** das Modul (9) eine Einheit (17) zum Vergleich der Geschwindigkeit und der Belastung des Motors mit kalibrierten Schwellwerten aufweist, die die Nacheinspritzschaltung (18) steuern kann, wenn die Stabilitätsbedingungen seit einer festgesetzten Zeit hergestellt sind.

12. Vorrichtung zur Kontrolle eines Abgasentgiftungskatalysators nach einem der Ansprüche 10 bis 11, **dadurch gekennzeichnet, dass** sie eine Testschaltung (11) des Sensors (5) aufweist, die es ermöglicht, seinen Betriebszustand zu überprüfen.

13. Vorrichtung zur Kontrolle eines Abgasentgiftungskatalysators nach einem der Ansprüche 10 bis 12, **dadurch gekennzeichnet, dass** das Modul (8) eine Schaltung (12) zur Messung der vom Fahrzeug im Leerlauf verbrachten Zeit aufweist, die die im Leerlauf verbrachte Zeit messen und mit einem bestimmten Mindestschwellwert vergleichen kann.

14. Vorrichtung zur Kontrolle eines Abgasentgiftungskatalysators nach einem der Ansprüche 10 bis 13, **dadurch gekennzeichnet, dass** das Modul (8) eine Schaltung (13) zur Bewertung der Beschleunigung des Fahrzeugs ausgehend vom Schalten in den eingelegten Getriebegang aufweist.

15. Vorrichtung zur Kontrolle eines Abgasentgiftungskatalysators nach einem der Ansprüche 10 bis 14, **dadurch gekennzeichnet, dass** das Modul (8) eine Schaltung (13) zur Bewertung der Beschleunigung des Fahrzeugs ausgehend von den Einspritzparametern aufweist.

16. Vorrichtung zur Kontrolle eines Abgasentgiftungskatalysators nach einem der Ansprüche 10 bis 15, **dadurch gekennzeichnet, dass** das Modul (8) eine Schaltung (13) zur Bewertung der Beschleunigung des Fahrzeugs ausgehend vom Luftdurchsatz aufweist.

17. Vorrichtung zur Kontrolle eines Abgasentgiftungskatalysators nach einem der Ansprüche 10 bis 16, **dadurch gekennzeichnet, dass** das Modul (9) eine Schaltung zur Filterung der Ableitung des vom Sensor (5) gelieferten Temperatursignals aufweist.
